# EUROPÄISCHE PATENTSCHRIFT

(11) **EP 4 158 291 B1**
(45) Veröffentlichungstag und Bekanntmachung des Hinweises auf die Patenterteilung: **03.07.2024**
(21) Anmeldenummer: 21731906.0
(22) Anmeldetag: 25.05.2021
(51) Int. Cl.: G01G 7/04

(54) **MAGNETTOPF FÜR EINE TAUCHSPULENANORDNUNG, INSBESONDERE EINER TAUCHSPULENANORDNUNG EINER NACH DEM PRINZIP DER ELEKTROMAGNETISCHEN KRAFTKOMPENSATION ARBEITENDEN WAAGE**
POT MAGNET FOR A PLUNGER COIL ARRANGEMENT, MORE PARTICULARLY A PLUNGER COIL ARRANGEMENT OF A SCALE OPERATING ON THE PRINCIPLE OF ELECTROMAGNETIC FORCE COMPENSATION
POT MAGNÉTIQUE CONÇU POUR UN ENSEMBLE BOBINE MOBILE, EN PARTICULIER UN ENSEMBLE BOBINE MOBILE FONCTIONNANT SELON LE PRINCIPE DE LA BALANCE À COMPENSATION DE FORCE ÉLECTROMAGNÉTIQUE

(30) Priorität: 26.05.2020 DE 102020114058
(43) Veröffentlichungstag der Anmeldung: 05.04.2023
(73) Patentinhaber: WIPOTEC GmbH, 67657 Kaiserslautern (DE)
(72) Erfinder: GOTTFRIEDSEN, Jan, 67714 Waldfischbach-Burgalben (DE); ZINKE, Bernd, 66399 Mandelbachtal (DE)
(74) Vertreter: Eder Schieschke & Partner mbB
(86) Internationale Anmeldenummer: PCT/DE2021/100454
(87) Internationale Veröffentlichungsnummer: WO 2021/239188

(56) Entgegenhaltungen:
- DE-A1-102017 110 930
- JP-A- H01 250 024
- JP-U- H0 664 126

## Beschreibung

Die Erfindung betrifft einen Magnettopf für eine Tauchspulenanordnung, insbesondere einer Tauchspulenanordnung einer nach dem Prinzip der elektromagnetischen Kraftkompensation arbeitenden Waage.

Magnettöpfe für Tauchspulenanordnungen, die sich auch für Messzwecke eignen, sind in vielfältigen Ausführungsformen bekannt. Grundsätzlich bestehen solche Magnettöpfe aus einem Gehäuse, das meist topfförmig ausgebildet ist und einen ebenen Topfboden besitzt, von dem aus sich eine im Querschnitt kreisringförmige Gehäusewand nach oben erstreckt. Das Gehäuse kann auch einen Gehäusedeckel aufweisen, welcher beispielsweise mit der Gehäusewand verschraubt sein kann. Die Gehäusewand kann eine Ausnehmung aufweisen, die für den Durchgriff eines Arms dient, welcher eine Tauchspule trägt, die im Gehäuse aufgenommen ist. Die Tauchspule greift dabei in einen Ringspalt ein, der zwischen der inneren Umfangsfläche der Gehäusewand und der äußeren Umfangsfläche einer Magneteinheit gebildet ist, welche im Innenraum des Gehäuses vorgesehen ist. Die Magneteinheit besteht dabei aus einem Permanentmagneten, der üblicherweise als Ringmagnet mit axialer Magnetisierung ausgebildet ist, und einer am oberen Ende des Permanentmagneten vorgesehenen Polplatte zur Vergleichmäßigung des Magnetfeldes.

Bei einer Verwendung eines solchen Magnettopfes für Messvorrichtungen, wie einer nach dem Prinzip der elektromagnetischen Kraftkompensation arbeitenden Waage, ist es erforderlich, dass die Position der Polplatte relativ zu einer Nullposition der Tauchspule extrem konstant gehalten wird. Hierzu hat es sich als unzureichend erwiesen, wenn der Permanentmagnet mit seiner Unterseite mit der inneren Bodenfläche des Gehäuses verklebt und die Polplatte mit der Oberseite des Permanentmagneten verbunden, beispielswiese ebenfalls verklebt, wird (siehe z.B. JP H06 64126 U. Denn Änderungen der Temperatur und der Luftfeuchtigkeit können zu einer Änderung der Dicken der Klebeschichten führen und damit zu einer Änderung der axialen Position der Polplatte. Dies beeinträchtigt wiederum die Genauigkeit der Messvorrichtung.

In der DE 10 2017 110 930 B4 wird daher eine Lösung beschrieben, bei der einerseits die Position der Polplatte möglichst konstant gehalten wird und andererseits auch Änderungen des Magnetfeldes vermieden werden, wenn sich die Umgebungsbedingungen (insbesondere Temperatur und Luftfeuchtigkeit) ändern. Hierzu wird die Polplatte mittels einer starren mechanischen Verbindung mit dem Boden des Gehäuses des Magnettopfes verbunden und der Permanentmagnet wird - entkoppelt von der mechanischen Verbindung - mit der Polplatte verbunden, wobei hierzu die Oberseite des Permanentmagneten mit der Unterseite der Polplatte verklebt wird. Somit wird neben einer im Wesentlichen konstanten Position der Polplatte (hier können sich allenfalls unwesentliche Änderungen infolge der temperaturbedingten Materialausdehnung der mechanischen Verbindungselemente auswirken) erreicht, dass sich bei einer Dickenänderung der Klebeschicht und der hierdurch bedingten Änderung der Spaltbreite zwischen der Polplatte und dem Permanentmagneten die Spaltbreite zwischen der Unterseite des Permanentmagneten und dem Gehäuseboden entsprechend ändert, d.h. die Gesamtbreite der beiden Spalte bleibt gleich. Hierdurch wirken sich die Änderungen der Umgebungsbedingungen nur noch unwesentlich auf das erzeugte Magnetfeld aus, da zwar die Gesamtbreite der Spalte konstant bleibt, die beiden Spalte jedoch mit unterschiedlichen Medien (Klebstoff bzw. Luft) gefüllt sind.

Nachteilig bei dieser Struktur eines Magnettopfes ist jedoch, dass gerade bei Verwendungen des Magnettopfes in Umgebungen, in denen mechanische Erschütterungen oder Vibrationen auftreten können, die Messgenauigkeit darunter leidet, dass die Einheit bestehend aus Permanentmagnet und Polplatte Positionsänderungen relativ zum Gehäuse erfährt. Zur Erhöhung der Stabilität sind zusätzliche Maßnahmen, wie zusätzliche Stütz- bzw. Stabilisierungseinrichtungen erforderlich.

Aus der JP H01 250024 A ist eine Konstruktion für einen derartigen Magnettopf bekannt, bei welcher zur Vermeidung bzw. Reduzierung von Kriecheffekten infolge von thermischer Energie, die durch die stromdurchflossene Spule erzeugt wird, die Polplatte nicht mit dem Permanentmagneten verklebt ist, sondern mittels eines wärmeleitenden Trägerelements, welches den Permanentmagneten umgreift, mit dem Boden des topfförmigen Gehäuses verbunden ist. Der Permanentmagnet ist mit dem Boden des Gehäuses verklebt.

Ausgehend von diesem Stand der Technik liegt der Erfindung die Aufgabe zugrunde, einen Magnettopf für eine Tauchspulenanordnung, insbesondere einer Tauchspulenanordnung einer nach dem Prinzip der elektromagnetischen Kraftkompensation arbeitenden Waage, zu schaffen, der bei gleichbleibend einfachem Aufbau eine verbesserte Messgenauigkeit in Umgebungen gewährleistet, in denen mechanische Erschütterungen oder Vibrationen auftreten, und die insgesamt eine verbesserte mechanische Stabilität aufweisen.

Die Erfindung löst diese Aufgabe mit den Merkmalen des Patentanspruchs 1. Weitere Ausführungsformen der Erfindung ergeben sich aus den Unteransprüchen.

Die Erfindung geht von der Erkenntnis aus, dass ein Magnettopf für eine Tauchspulenanordnung einer Messvorrichtung, insbesondere einer nach dem Prinzip der elektromagnetischen Kraftkompensation arbeitenden Waage, der eingangs genannten Art hinsichtlich der erreichbaren Messgenauigkeit verbessert werden kann, wenn der mechanische Aufbau möglichst unempfindlich gegenüber Beschleunigungen, insbesondere durch Vibrationen oder Erschütterungen verursachte Beschleunigungen, ist. Die Anmelderin hat in dieser Hinsicht festgestellt, dass bei dem in der DE 10 2017 110 930 B4 beschriebenen Magnettopf die aus der Polplatte und dem Permanentmagneten bestehende Einheit mittels einer entsprechend massiv ausgebildeten starren mechanischen Verbindung gehalten sein muss, damit die gesamte Tauchspulenanordnung ausreichend stabil gegenüber Vibrationen und Stößen ist. Hierzu ist in dieser Schrift offenbart, zusätzlich zu dem den Permanentmagneten koaxial durchgreifenden Tragelement Stützelemente vorzusehen, die die Polplatte zusätzlich gegenüber dem Topfboden abstützen und die den Permanentmagneten berührungsfrei durchgreifen oder diesen umgeben. Allerdings wird durch diese Maßnahme entweder der Raumbedarf für die gesamte Einheit erhöht oder die Stärke des Permanentmagneten reduziert, wenn bei einer vorgegebenen Baugröße dessen Volumen infolge der Ausnehmungen für die Stützelemente oder den Raumbedarf für das diesen umgebende Stützelement reduziert werden muss.

Erfindungsgemäß wird die Empfindlichkeit des Magnettopfs, insbesondere der mechanischen Verbindung der Polplatte mit dem Gehäuseboden dadurch reduziert, dass der Permanentmagnet, anders als in der DE 10 2017 110 930 B4 gefordert, nicht mit der Polplatte, sondern mit dem Gehäuseboden verbunden ist. Hierdurch wird die "schwingend" aufgehängte Masse (mögliche Schwingungen werden dabei durch eine gerade nicht vollkommen starre mechanische Verbindung zwischen der Polplatte und dem Gehäuse bzw. Gehäuseboden verursacht) reduziert, da diese nur noch durch die Masse der Polplatte gebildet ist. Der Permanentmagnet ist erfindungsgemäß mit einer der Bodenfläche des Innenraums des Gehäuses zugewandten Unterseite mit dem Gehäuseboden verklebt.

Somit ist die Polplatte von dem Permanentmagneten entkoppelt und nur die Polplatte muss mittels einer starren Befestigungseinrichtung mit dem Gehäuse verbunden und dabei derart positioniert werden, dass die Unterseite der Polplatte der Oberseite des Permanentmagneten zugewandt und ein Spalt mit einer vorgegebenen Spaltbreite zwischen der Unterseite der Polplatte und der Oberseite des Permanentmagneten gebildet ist.

Auch bei dieser erfindungsgemäßen Lösung eines konstruktiven Aufbaus für einen Magnettopf für eine Messvorrichtung wird erreicht, dass bei Änderungen der Umgebungsbedingungen (insbesondere der Temperatur und/oder der Luftfeuchte), die zu einer Änderung der Dicke der Kleberschicht zwischen dem Topfboden und der Unterseite des Permanentmagneten führen, die Summe der Spaltbreiten des Spalts zwischen dem Topfboden und dem Permanentmagneten und des Spalts zwischen dem Permanentmagneten und der Polplatte im Wesentlichen konstant bleibt. Die Summe dieser Spaltbreiten wird allenfalls durch eine temperaturbedingte Längenänderung der mechanisch starren Verbindung zwischen dem Topfboden und der Polplatte beeinflusst, wobei dieser Effekt in der Praxis vernachlässigt werden kann.

Durch die geringere Masse, die mittels der (in der Praxis selbstverständlich nicht vollkommen starren) mechanischen Verbindung mit dem Gehäuse verbunden ist, ergibt sich eine geringe Empfindlichkeit gegenüber Vibrationen oder Erschütterungen, die auf den Magnettopf wirken. Zudem ergibt sich der Vorteil, dass harte Stöße, die beispielsweise bei einem Transport der betreffenden Messvorrichtung auf den Magnettopf wirken, kaum zu einer Beschädigung, beispielsweise einer Deformation oder gar einem Bruch der mechanischen Verbindung führen können. Zudem kann die mechanische Verbindung eine geringere Baugröße aufweisen, so dass, bei vorgegebener Baugröße der gesamten Einheit, ein Permanentmagnet mit größerem Volumen verwendet werden kann oder sich eine insgesamt geringere Baugröße der gesamten Einheit (bestehend aus Polplatte, Permanentmagneten und mechanische Verbindung) ergibt.

Grundsätzlich kann erfindungsgemäß die Befestigungseinrichtung für das Halten und Fixieren der Position der Polplatte in beliebiger Weise ausgebildet sein. Sie muss lediglich gewährleisten, dass die Polplatte ausreichend starr mit dem Gehäuse verbunden wird und dabei eine für den jeweiligen Anwendungsfall ausreichende Starrheit aufweisen, so dass Vibrationen oder Erschütterungen, die auf das Gehäuse wirken nicht zu Relativbewegungen der Polplatte gegenüber dem Gehäuse führen. Weiterhin muss die Befestigungseinrichtung so ausgebildet sein, dass eine ausreichende Festigkeit gewährleistet ist, so dass Stöße oder Erschütterungen, die insbesondere beim Transport der betreffenden Messvorrichtung oder des Magnettopfs auftreten können, nicht zu einer Beschädigung des Magnettopfs (beispielsweise einem Verbiegen oder Brechen der Befestigungseinrichtung) führen.

Erfindungsgemäß weist die Befestigungseinrichtung ein den Permanentmagneten durchgreifendes Trägerelement auf, wobei das Durchgreifen berührungslos oder zumindest derart erfolgt, dass trotz einer Berührung eine (beispielsweise gleitende) Verschiebebewegung zwischen dem Permanentmagneten und dem Trägerelement ermöglicht wird, ohne dass wesentliche radiale Klemmkräfte erzeugt werden, die zu einem Stick-Slip-Effekt bei einer Relativbewegung der Komponenten in der Richtung des Durchgreifens führen. Hierdurch wird vermieden, dass bei einer Änderung der Dicke der Kleberschicht zwischen dem Topfboden und dem Permanentmagneten und einer hierdurch verursachten Bewegung des Permanentmagneten in dessen axialer Richtung (d. h. senkrecht zum Topfboden) axiale (oder auch radiale) Kräfte auf das Trägerelement übertragen werden, die zu (plötzlichen) Bewegungen der vom Trägerelement gehaltenen Polplatte führen würden.

Nach einer Ausführungsform kann das Trägerelement mit der Polplatte und/oder dem Gehäuse verschraubt sein. Insbesondere die Verbindung des Trägerelements mit dem Gehäuse, insbesondere dem Gehäuseboden, kann durch Verschrauben erfolgen. Die Verbindung zwischen der Polplatte und dem Trägerelement kann neben einem Verschrauben beispielsweise auch durch eine stoffschlüssige Verbindung, beispielsweise verschweißen, erfolgen. Auch eine einstückige Herstellung dieser beiden Teile ist möglich.

Das Trägerelement kann bei einer Herstellung als separates Element eine obere Anschlagfläche aufweisen, welche mit der Unterseite der Polplatte zusammenwirkt, und einen oberen Gewindezapfen aufweisen, der in eine Gewindebohrung der Polplatte eingreift. In gleicher Weise kann das Trägerelement eine untere Anschlagfläche aufweisen, welche mit der Bodenfläche des Innenraums des Gehäuses zusammenwirkt. Das Verschrauben des unteren Endes des Trägerelements mit dem Gehäuse kann mittels eines am unteren Ende des Trägerelements vorgesehenen Gewindezapfens erfolgen, welcher in eine Gewindebohrung im Boden des Gehäuses eingreift. Das Verschrauben kann jedoch auch in einer solchen Weise erfolgen, dass in der Unterseite des Trägerelements eine Gewindebohrung vorgesehen ist, in welcher eine Schraube eingreift, die den Boden des Gehäuses durchragt.

Nach einer anderen Ausführungsform kann das Trägerelement aus einer Schraube und einer Abstandshülse bestehen, wobei die Schraube die Abstandshülse durchgreift. In diesem Fall bildet die Abstandshülse die Anschlagflächen, welche mit der Unterseite der Polplatte bzw. der Bodenfläche des Gehäuses zusammenwirken. Das vordere Ende der Schraube greift in eine Gewindebohrung in der Unterseite der Polplatte ein.

Nach einer weiteren Ausführungsform kann die Befestigungseinrichtung ein oder mehrere Stützelemente (beispielsweise drei, gleichmäßig über den Umfang verteilt angeordnete Stützelemente) umfassen, welche die Polplatte gegenüber der Bodenfläche des Innenraums des Gehäuses abstützen und welche am Außenumfang des Permanentmagnets berührungslos zu diesem oder derart mit diesem in Berührung stehend angeordnet sind, dass trotz einer Berührung eine gleitende Bewegung zwischen dem Permanentmagneten und dem einen oder mehreren Stützelementen ermöglicht wird, ohne dass wesentliche radiale Klemmkräfte erzeugt werden, die zu einem Stick-Slip-Effekt bei einer Relativbewegung der Komponenten in der Richtung der Längserstreckung der einen oder mehreren Stützelemente führen würden. Das eine oder die mehreren Stützelemente können dabei zusätzlich zu einem zentralen bzw. koaxialen Trägerelement vorgesehen sein. Die Stützelemente können lediglich durch axiale Klemmkräfte zwischen der Polplatte und dem Gehäuse, insbesondere der Bodenfläche des Gehäuses in ihrer Position fixiert sein. Durch die Anordnung der Stützelemente am Außenumfang der Polplatte können Kippbewegungen der Polplatte wirksam vermieden werden. Das eine oder die mehreren Stützelemente können auch (nur) mit ihren oberen Enden mit der Polplatte, beispielsweise der Unterseite der Polplatte, oder (nur) mit ihren unteren Enden mit dem Gehäuse, insbesondere dem Gehäuseboden, verbunden sein. Die Montage der Polplatte kann in diesem Fall auf einfache Weise mittels einer den Permanentmagneten (vorzugsweise koaxial) durchgreifende Schraube erfolgen. Ein zentrales bzw. koaxiales Stützelement, welches gleichzeitig als Abstandshalter fungiert, ist in diesem Fall nicht erforderlich.

Nach einer Ausführungsform kann die Befestigungseinrichtung ein im Querschnitt hohlzylinderförmiges Stützelement umfassen, welches den Permanentmagneten an dessen Außenumfang berührungslos (bzw. derart berührend, dass keine großen axialen Kräfte übertragen werden) umgreift. Die Montage kann, wie vorstehend beschrieben, mittels einer den Permanentmagneten zentral und koaxial durchgreifenden Schraube (mit oder ohne zusätzliche Abstandshülse) erfolgen. Auch dieses Stützelement kann (nur) mit der Polplatte oder auch (nur) mit dem Gehäuseboden verbunden sein.

Nach einer Ausführungsform kann die Befestigungseinrichtung ausschließlich ein oder mehrere, den Permanentmagneten umgebende Stützelement umfassen, wobei die Befestigung der Polplatte dadurch erfolgt, dass diese mit dem oder den oberen Enden des oder der Stützelemente verbunden ist und das oder die unteren Enden der Stützelemente mit dem Gehäuse, insbesondere dem Gehäuseboden. Die Verbindung der oberen oder der unteren Enden kann dabei eine nicht lösbare Verbindung sein, beispielsweise eine stoffschlüssige Verbindung (inkl. der Herstellung der Polplatte und des wenigstens einen Stützelements als einstückiges Teil). Es ist auch denkbar, die Polplatte und das wenigstens eine Stützelement einstückig aus demselben Material herzustellen, welches dann allerdings ferromagnetisch sein muss. In diesem Fall muss der Querschnitt des wenigstens einen Stützelements allerdings sehr gering gewählt werden, um den magnetischen Widerstand derart groß werden zu lassen, dass ein magnetischer Kurzschluss vermieden wird. Bei dieser Variante mit einem ausschließlich den Permanentmagneten umgebenden Stützelement kann auf einen koaxialen Durchbruch des Permanentmagneten verzichtet und anstelle eines Ringmagneten ein zylinderförmiger, insbesondere kreiszylinderförmiger Permanentmagnet (mit axialer Magnetisierung) verwendet werden.

Die Erfindung wird nachstehend anhand in der Zeichnung dargestellter Ausführungsformen näher erläutert. In der Zeichnung zeigen:

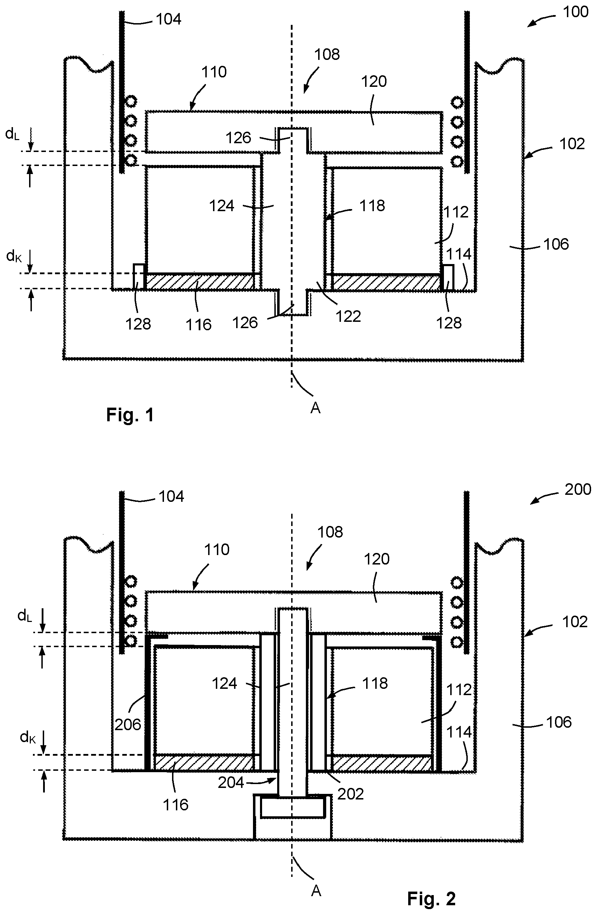

- Fig. 1: eine erste Ausführungsform eines Magnettopfs nach der Erfindung mit einem zentralen, den Permanentmagneten koaxial durchgreifenden Trägerelement; welches beiderseits einen Gewindefortsatz aufweist und damit in entsprechende Gewindebohrungen in der Polplatte bzw. den Gehäuseboden eingreift; und
- Fig. 2: eine zweite Ausführungsform eines Magnettopfs nach der Erfindung mit einem zentralen, den Permanentmagneten koaxial durchgreifenden Trägerelement; welches eine Abstandshülse und eine diese durchgreifende Schraube umfasst, und mit einem den Permanentmagneten umgebenden zusätzlichen Stützelement.

Fig. 1 zeigt eine Tauchspulenanordnung 100 für eine Messvorrichtung, insbesondere eine nach dem Prinzip der elektromagnetischen Kraftkompensation arbeitenden elektronischen Waage (nicht näher dargestellt).

Die Tauchspulenanordnung 100 weist einen Magnettopf 102 auf, der mit seinen wesentlichen Bestandteilen dargestellt ist, sowie eine in den Magnettopf eingreifende Tauchspule 104 der ebenfalls nicht näher dargestellten Messvorrichtung. Die Tauchspule 104 ist an einem Element der Messvorrichtung, beispielsweise an einem Hebelarm einer nach dem Prinzip der elektromagnetischen Kraftkompensation arbeitenden elektronischen Waage angeordnet, wobei eine auf das Element wirkende Kraft, gegebenenfalls mit einem bestimmten Hebelverhältnis, auf die Tauchspule übertragen wird.

Der Magnettopf 102 weist ein Gehäuse 106 mit einem Innenraum 108 auf, in welchem eine Magneteinheit 110 angeordnet ist. Der Magnettopf 102, insbesondere das Gehäuse 106 und die Magneteinheit 110, können im Wesentlichen rotationssymmetrisch zur Rotationsachse A ausgebildet sein. Dies ist jedoch nicht zwingen erforderlich, wobei in derartigen Fällen die Achse A als Längserstreckungsrichtung der betreffenden Komponenten verstanden werden kann.

Die Magneteinheit umfasst einen Permanentmagneten 112, der im dargestellten Ausführungsbeispiel als Ringmagnet mit axialer Magnetisierung ausgebildet ist. Der Ringmagnet kann, wie im dargestellten Ausführungsbeispiel, einen im Querschnitt kreisförmigen Außenumfang und einen im Querschnitt kreisförmigen Durchbruch aufweisen. Die untere Stirnseite (Unterseite) des Permanentmagneten 112 ist mit einer Bodenfläche 114 des Innenraums 108 des Gehäuses 106 verklebt. Die Kleberschicht 116 weist eine Dicke d_{K} auf. Der Ringmagnet 112 besitzt eine zentrale, koaxiale Ausnehmung, durch welche eine Befestigungseinrichtung 118 für eine von der Magneteinheit 110 weiterhin umfasste Polplatte 120 ragt, die, ebenso wie die Befestigungseinrichtung 118, im Wesentlichen berührungslos zu dem Permanentmagneten 112 im Innenraum 108 des Gehäuses 106 angeordnet ist. Die Polplatte 120 ist oberhalb der oberen Stirnseite (Oberseite) des Permanentmagneten 112 angeordnet, wobei zwischen der Unterseite der Polplatte und der Oberseite des Permanentmagneten ein Luftspalt mit einer Spaltbreite d_{L} vorgesehen ist. Im dargestellten Ausführungsbeispiel weist die Polplatte 120 eine zylindrische (insbesondere kreiszylindrische) Form auf, wobei die Umfangsfläche der Polplatte 120 mit der Umfangsfläche des Permanentmagneten 112 axial fluchtet.

Die Befestigungseinrichtung 118 ist bei dem in Fig 1 dargestellten Ausführungsbeispiel als Trägerelement 122 ausgebildet, welches mit einem kreiszylindrischen Bereich 124 die axiale Ausnehmung des Permanentmagneten 112 durchragt. Am oberen und unteren Ende des kreiszylindrischen Bereichs 124 weist das Trägerelement jeweils einen Gewindezapfen 126 auf, wobei der untere Gewindezapfen 126 in eine Gewindebohrung im Boden des Gehäuses 106 und der obere Gewindezapfen 126 in eine Gewindebohrung (ausgehend von der Unterseite) der Polplatte 120 eingreift. Das Trägerelement 122 weist zwischen dem zylindrischen Bereich 124 und jedem der Gewindezapfen 126 eine Anschlagschulter auf, die mit der Bodenfläche 114 des Innenraums 108 des Gehäuses 106 bzw. der Unterseite der Polplatte 120 zusammenwirkt, wobei die axiale Länge des zylindrischen Bereichs 124 zwischen den beiden Anschlagschultern den Abstand zwischen der Bodenfläche 114 und der Unterseite der Polplatte 120 definieren. Dieser Abstand ist so gewählt, dass sich ein vorgegebener Wert für die Spaltbreite d_{L} ergibt.

Der Permanentmagnet 112 bzw. die Polplatte 120 sind jeweils so im Innenraum 108 des Gehäuses 106 angeordnet, dass sich zwischen dem Außenumfang des Permanentmagneten 112 bzw. der Polplatte 120 und der Umfangsfläche des Innenraums 108 ein Ringspalt ergibt, in welchen die Tauchspule 104 eingreift. Die Polplatte 120 dient dabei zur Vergleichmäßigung und vor allem zur Bündelung des vom Permanentmagneten 112 erzeugten Magnetfelds in dem Ringspalt. Vorzugsweise weist der Ringspalt über seinen gesamten Umfang eine konstante Spaltbreite (in Ebenen senkrecht zur Längsachse des Permanentmagneten bzw. Ringmagnet 112) um die Polplatte 120 auf. Die Umfangsfläche des Innenraums 108 muss hierzu nicht zwingend streng kreiszylindrisch mit einem konstanten Radius ausgebildet sein. Vielmehr kann es sich als günstig erweisen, wenn die Umfangsfläche bzw. die Innenwandung des Innenraums 108 eine Vorkragung aufweist, wobei die Umfangsfläche im Bereich der Vorkragung einen kleineren Radius aufweist als oberhalb oder unterhalb der Vorkragung.

Die durch das Trägerelement 122 gebildete Befestigungseinrichtung 118 für die Polplatte 120 ist mechanisch derart starr ausgebildet, dass bei mechanischen Belastungen innerhalb eines vorgegebenen Rahmens keine oder allenfalls innerhalb einer vorgegebenen Toleranz liegende Relativbewegungen zwischen der Polplatte 120 und dem Gehäuse 106 (beispielsweise Kipp- oder Taumelbewegungen der Polplatte um eine bzw. zwei zueinander senkrechte Achsen in einer horizontalen Ebene (bzw. einer Ebene parallel zur Bodenfläche 114 des Gehäuses 106) auftreten. Hierdurch kann sichergestellt werden, dass selbst bei Vibrationen oder anderweitigen Erschütterungen während einer Messung die Position der Polplatte innerhalb des Gehäuses 106 und damit die Position der Polplatte relativ zur Tauchspule 104 ausreichend konstant ist, so dass keine oder nur innerhalb einer vorbestimmten Toleranz liegende Einflüsse auf das Messergebnis auftreten.

Wie vorstehend bereits erläutert, wirken sich Positionsänderungen der Polplatte in jedweder Form (d. h. Kippbewegungen und translatorische Bewegungen der Polplatte, die eine Komponente in Richtung der Achse der Tauchspule bzw. des Permanentmagneten aufweisen) auf die Messgenauigkeit aus. Aus diesem Grund wurde auch eine mechanisch starre Verbindung zwischen der Polplatte 120 und dem Gehäuse 106 gewählt, wobei eine derartige mechanisch starre Verbindung zwischen den Komponenten Polplatte, Befestigungseinrichtung und Gehäuse insbesondere durch Verschrauben, Verschweißen oder durch die einschlägige Fertigung jeweils zweier dieser Komponenten erfolgen kann. Ausgeschlossen ist eine Verbindung durch reines Verkleben oder unter der Verwendung von Materialien, die unter Umwelteinflüssen, insbesondere Temperatur und Luftfeuchtigkeit, eine Volumenänderung erfahren, beispielsweise durch Aufquellen infolge von eingelagerter Feuchtigkeit.

Während die Polplatte 120 aus einem ferromagnetischen Material, insbesondere einem ferromagnetischen Metall, beispielsweise Stahl, besteht, muss die Befestigungseinrichtung 118, insbesondere das Trägerelement 122 aus einem nicht ferromagnetischen Material hergestellt sein. Hierdurch wird eine magnetische Isolation zwischen der Polplatte 120 und dem ebenfalls aus einem ferromagnetischen Material bestehenden Gehäuse 106 erreicht, d.h. ein magnetischer Kurzschluss zwischen diesen Komponenten vermieden. Es ergibt sich somit die gewünschte hohe Dichte von Feldlinien, d.h. der gewünschte hohe magnetische Fluss, in dem Ringspalt, insbesondere zwischen der Polplatte 120, und dem Gehäuse106.

Die Anordnung des Magneten 112 auf der Bodenfläche des Gehäuseinnenraums 108 weist gegenüber der Konstruktion gemäß der DE 10 2017 110 9 30 B4 den Vorteil auf, dass die mittels der mechanisch starren Befestigungseinrichtung 118 gehaltene Masse deutlich geringer ist. Demzufolge kann die Befestigungseinrichtung 118 kleiner bzw. leichter dimensioniert werden oder sie kann bei gleicher Dimensionierung eine weitaus größere Starrheit aufweisen, so dass es bei derselben mechanischen Belastung zu geringeren Relativbewegungen zwischen der Polplatte 120 und dem Gehäuse 106 kommt.

Weiterhin gewährleistet die vorstehend erläuterte Konstruktion eines Magnettopfs 102 ebenfalls den Vorteil, dass die Summe der Spaltbreiten zwischen der Bodenfläche 114 und der Unterseite des Permanentmagneten 112 d_{K} und der Oberseite des Permanentmagneten 112 und der Unterseite der Polplatte 120 d_{L} auch bei einer Änderung der Umgebungsbedingungen, insbesondere der Luftfeuchtigkeit unter der Temperatur, konstant bleibt. Denn ändert sich die Spaltbreite d_{K} in einer Richtung, so ändert sich die Spaltbreite d_{L} entgegengesetzt. Vergrößert sich beispielsweise die Spaltbreite d_{K} in der Folge erhöhter Luftfeuchtigkeit und/oder erhöhter Temperatur, so verringert sich die Spaltbreite d_{L} um denselben Betrag. Dies hat zur Folge, dass sich der magnetische Widerstand der durch die Kleberschicht 116 und die Luftschicht verursachten Spalte annähernd konstant bleibt, auch wenn sich die einzelnen Spaltbreiten (gegenläufig) ändern.

Fig. 2 zeigt eine weitere Ausführungsform einer Tauchspulenanordnung 200, bei welcher gleiche oder gleichartige Teile bzw. Bestandteile mit identischen Bezugszeichen wie bei der Ausführungsform gemäß Fig. 1 bezeichnet sind.

Im Unterschied zu der Ausführungsform gemäß Fig. 1 ist das Trägerelement bei der Tauchspulenanordnung 200 durch eine Abstandshülse 202 und eine die Abstandshülse durchgreifende Schraube 204 gebildet. Die Schraube 204 ragt durch eine zentrale Bohrung im Boden des Gehäuses 106, wobei sich die Bohrung an der Unterseite des Gehäusebodens zur Aufnahme des Schraubenkopfs erweitern kann. Dabei sollte keines der beiden Elemente, also die Schraube 204 oder die Abstandshülse 202, aus einem ferromagnetischen Material, insbesondere einem ferromagnetischen Metall, bestehen, um einen Pfad für den magnetischen Fluss und damit einen magnetischen Kurzschluss zu vermeiden. Die Abstandshülse 202 muss in jedem Fall aus einem Material bestehen, welches gegenüber Änderungen der Umweltbedingungen, insbesondere einer Änderung der Luftfeuchtigkeit, unempfindlich ist (was die Änderung seines Volumens, insbesondere seiner Länge, anbelangt).

Bei dieser Ausführungsform eines zweiteiligen Trägerelements kann eine exakte Positionierung der Abstandshülse (zur Gewährleistung einer berührungsfreien Montage gegenüber dem Permanentmagneten 112) dadurch erfolgen, dass die Schraube in der Bohrung im Gehäuseboden exakt (und spielfrei bzw. mit einem sehr kleinen Spiel) geführt ist und dass zudem auch die Abstandshülse 202 die Schraube 204 spielfrei bzw. mit einem sehr kleinen Spiel umgreift. Zudem sollten die mit der Bodenfläche 114 bzw. der Unterseite der Polplatte 120 zusammenwirkenden Stirnflächen der Abstandshülse exakt senkrecht zu den betreffenden Flächen ausgebildet sein, so dass die Abstandshülse exakt senkrecht zur Bodenfläche 114 bzw. Fluchten mit der Längsachse der Schraube positioniert wird. Alternativ oder zusätzlich können zur Positionierung der Abstandshülse 202 und damit auch der Polplatte 120 an der Unterseite der Polplatte 120 und/oder im Gehäuseboden Vertiefungen ausgebildet sein, in welche die jeweiligen Enden der Abstandshülse 202 spielfrei bzw. mit einem sehr kleinen Spiel eingreifen. Derartige Befestigungsmaßnahmen unter Verwendung von Vertiefungen können auch auf andere Elemente übertragen werden, beispielsweise auf die Abstandselemente 206 (siehe unten).

Obwohl vorstehend vorausgesetzt wurde, dass die Befestigungseinrichtung 118 im Wesentlichen berührungsfrei zu dem Permanentmagneten 112 vorgesehen sein soll, so kann doch generell eine Berührung vorliegen, wenn diese so ausgestaltet ist, dass keine wesentlichen Klemmkräfte zwischen dem Permanentmagneten und der Befestigungseinrichtung wirken. Die Klemmkräfte müssen dabei so gering sein, dass sich bei einer axialen Positionsänderung des Permanentmagneten 112 kein Stick-Slip-Effekt zwischen dem Permanentmagneten 112 und der Befestigungseinrichtung 118, beispielsweise dem Trägerelement 122, ergibt. Denn hierdurch würden plötzliche Bewegungen des Permanentmagneten erzeugt, die zu Vibrationen und damit zu einer Verfälschung des Messergebnisses führen würden. So kann anstelle einer vollkommen berührungsfreien Anordnung der Befestigungseinrichtung 118 gegenüber dem Permanentmagneten 112 auch eine berührende Anordnung vorgesehen sein, wenn für ein ausreichendes Gleitvermögen zwischen den einander gegenüberstehenden Bestandteilen gesorgt ist, beispielsweise durch eine entsprechende Materialwahl und/oder eine zusätzliche Leitschicht in Form einer Flüssigkeit oder einer gelartigen Substanz zwischen den Berührungsflächen.

Zur Montage der vorstehend erläuterten Ausführungsformen gemäß den Fig. 1 und 2 kann beispielsweise zunächst der Permanentmagnet 112 mit dem Topfboden 114 verklebt werden. Dies kann beispielsweise durch das vorherige Einsetzen eines Zentrierelements anstelle des Trägerelements geschehen, wobei das Zentrierelement einen Durchmesser aufweist, der dem Innendurchmesser des Durchbruchs des Permanentmagneten 112 entspricht. Nach dem Aushärten des Klebers kann das Zentrierelement wieder entfernt werden und anstelle dessen das Trägerelement 122 eingesetzt werden, welches einen geringeren Außendurchmesser aufweist als der Durchbruch des Permanentmagneten 112. Auf diese Weise kann eine berührungsfreie Montage zwischen der Befestigungseinrichtung 118 und dem Permanentmagneten erfolgen.

Soll eine berührende Montage zwischen der Befestigungseinrichtung 118 und dem Permanentmagneten 112 erfolgen, so kann die Befestigungseinrichtung, z.B. das Trägerelement 122 oder auch die Abstandshülse 202 in Verbindung mit der Schraube 204, auch gleichzeitig als Zentriervorrichtung bei der Montage dienen.

Es ist auch möglich, am Boden des Gehäuses 106 Zentrierhilfen für den Permanentmagneten 112 vorzusehen. Beispielsweise kann die Bodenfläche Anschlagflächen aufweisen, welche zum Zweck der Zentrierung an der Umfangsfläche des Permanentmagneten 112 angreifen. Wie schematisch in Fig. 1 dargestellt, können derartige Anschlagflächen durch einen oder mehrere Vorsprünge 128 gebildet sein, die am Gehäuseboden vorgesehen sind. Beispielsweise können drei im Winkelabstand von 120° Vorsprünge vorgesehen sein. Ein derartiger Vorsprung kann sich auch über den gesamten Umfang des Permanentmagneten 112 erstrecken. Die Höhe des oder der Vorsprünge 128 sollte relativ gering sein, um einen Stick-Slip-Effekt zwischen dem Permanentmagneten 112 und dem Vorsprung bzw. dessen Anschlagfläche bei einer Änderung der Dicke d_{K} der Kleberschicht 116 zu vermeiden. Die Höhe einer solchen Anschlagfläche sollte beispielsweise derart gewählt sein, dass sie sich im montierten bzw. verklebten Zustand des Permanentmagneten 112 nicht mehr als 5 bis 15 Prozent mit der Höhe des Permanentmagneten (d. h. der axialen Ausdehnung des Permanentmagneten) überlappt.

Eine solche Montagehilfe in Form von Vorsprüngen bzw. Anschlagflächen kann selbstverständlich auch bei der in Fig. 2 dargestellten Ausführungsform vorgesehen sein.

Bei der in Fig. 2 dargestellten Ausführungsform weist die Befestigungseinrichtung zusätzlich wenigstens ein Abstandselement 206 auf. Dieses kann beispielsweise mit der Polplatte 120 verbunden sein. Das Abstandselement 206 kann als Hohlzylinder mit einer vorgegebenen (vorzugsweise relativ geringen) Wandstärke ausgebildet sein. Die Höhe bzw. axiale Ausdehnung des Hohlzylinders entspricht der Abstandshülse 202. Sie kann auch minimal größer sein, so dass mittels der Schraube 204 eine Vorspannung in dem wenigstens einen Abstandselement erzeugt wird, wenn die Schraube 204 soweit angezogen wird, dass die Abstandshülse sowohl von der Unterseite der Polplatte 120 als auch von der Bodenfläche beaufschlagt wird. Anstelle eines hohlzylinderförmigen Abstandselements 206 können selbstverständlich auch mehrere, beispielsweise drei Abstandselemente über den Umfang der Polplatte verteilt angeordnet sein, beispielsweise in einem Winkelabstand von 120°.

Die Ausführungsform nach Fig. 2 kann auch so abgewandelt werden, dass anstelle eines Ringmagneten 112 ein zylindrischer Magnet verwendet wird und dass die Befestigungseinrichtung 118 nur wenigstens ein den Magneten umgebendes Trägerelement aufweist. Dieses kann bereits vor der Montage mit der Polplatte 120 verbunden sein. Beispielswiese kann ein derartiges Trägerelement im Wesentlichen hohlzylinderförmig (wie in Fig. 2 dargestellt) ausgebildet sein und an seinem unteren Ende einen sich nach außen und über den gesamten Umfang erstreckenden Flansch oder mehrere Flanschbereiche, die sich ausgehend vom unteren bzw. bodenseitigen End nach außen erstrecken. Der Außenumfang des Flansches (in einer horizontalen Ebene bzw. in einer Ebene parallel zur Bodenfläche114) kann dann mit dem Gehäuse verbunden, beispielsweise mit dem Topfboden verschraubt werden. Der Außenumfang des Flansches kann dabei so ausgebildet sein, dass er als Zentriermittel beim Einbau der Polplatte mit dem so ausgebildeten Trägerelement dient, wobei der Außenumfang des Flansches so mit der Innenfläche des Gehäuseinnenraums 108 zusammenwirkt, dass sich eine genau definierte (eindeutige) Position für die Polplatte und das Trägerelement ergibt.

### Bezugszeichenliste

- 100: Tauchspulenanordnung
- 102: Magnettopf
- 104: Tauchspule
- 106: Gehäuse
- 108: Innenraum
- 110: Magneteinheit
- 112: Permanentmagnet
- 114: Bodenfläche
- 116: Kleberschicht
- 118: Befestigungseinrichtung
- 120: Polplatte
- 122: Trägerelement
- 124: zylindrischer Bereich
- 126: Gewindezapfen
- 128: Vorsprung

- 200: Tauchspulenanordnung
- 202: Abstandshülse
- 204: Schraube
- 206: Abstandselement

- d_{K}: Spaltbreite der Kleberschicht
- d_{L}: Spaltbreite der Luftschicht

- A: Rotationsachse (Längserstreckungsrichtung)

## Patentansprüche

1. Magnettopf für eine Tauchspulenanordnung, insbesondere einer Tauchspulenanordnung einer nach dem Prinzip der elektromagnetischen Kraftkompensation arbeitenden Waage,
(a) mit einem Gehäuse (102), welches einen Innenraum (108) mit einer Bodenfläche (114) und einer hierzu senkrecht verlaufenden Umfangsfläche aufweist, und
(b) mit einer im Innenraum (108) des Gehäuses (102) angeordneten Permanentmagneteinheit (110), welche einen Permanentmagneten (112) und eine Polplatte (120) aufweist,
(c) wobei die Permanentmagneteinheit (110) derart im Gehäuse (102) vorgesehen ist, dass ein Ringspalt zur Aufnahme einer Tauchspule (104) der Tauchspulenanordnung (100; 200) zwischen einer Umfangsfläche der Polplatte (120) und der Umfangsfläche des Innenraums (108) des Gehäuses (102) gebildet ist,
(d) wobei der Permanentmagnet (112) mit seiner der Bodenfläche (114) des Innenraums (108) des Gehäuses (102) zugewandten Unterseite mit der Bodenfläche (114) verklebt ist, wobei eine Kleberschicht mit einer Dicke d_{K} zwischen der Bodenfläche (114) und der Unterseite des Permanentmagneten (112) ausgebildet ist, und
(e) wobei die Polplatte (120) von dem Permanentmagneten (112) beabstandet mittels einer starren Befestigungseinrichtung (118, 206) mit dem Gehäuse (102) verbunden und dabei derart positioniert ist, dass eine Unterseite der Polplatte (120) einer Oberseite des Permanentmagneten (112) zugewandt und ein Spalt mit einer vorgegebenen Spaltbreite d_{L} zwischen der Unterseite der Polplatte (120) und der Oberseite des Permanentmagneten (112) gebildet ist,
**dadurch gekennzeichnet,**
(f) **dass** die Befestigungseinrichtung (118) ein den Permanentmagneten (112) durchgreifendes Trägerelement (122; 202, 204) umfasst, wobei das Durchgreifen berührungslos oder zumindest derart erfolgt, dass trotz einer Berührung eine axiale Verschiebebewegung zwischen dem Permanentmagneten (112) und dem Trägerelement (122; 202, 204) ermöglicht wird, ohne dass wesentliche radiale Klemmkräfte erzeugt werden, die beispielsweise zu einem Stick-Slip-Effekt bei einer Relativbewegung der Komponenten in der Richtung des Durchgreifens führen.

2. Magnettopf nach Anspruch 1, **dadurch gekennzeichnet, dass** das Trägerelement (122) mit der Polplatte (120) und/oder dem Gehäuse (102) verschraubt ist.

3. Magnettopf nach Anspruch 1 oder 2, **dadurch gekennzeichnet, dass** das Trägerelement (122; 202, 204) eine obere Anschlagfläche aufweist, welche mit der Unterseite der Polplatte (120) zusammenwirkt, und dass das Trägerelement (122; 202, 204) eine untere Anschlagfläche aufweist, welche mit der Bodenfläche (114) des Innenraums (108) des Gehäuses (102) zusammenwirkt.

4. Magnettopf nach Anspruch 3, **dadurch gekennzeichnet, dass** das Trägerelement aus einer Schraube (204) und einer Abstandshülse (202) besteht, wobei die Schraube (204) die Abstandshülse (202) durchgreift und wobei die Abstandshülse (202) die Anschlagflächen bildet.

5. Magnettopf nach einem der vorhergehenden Ansprüche, **dadurch gekennzeichnet, dass** die Befestigungseinrichtung (118) wenigstens ein Stützelement (206) umfasst, welche die Polplatte (120) gegenüber der Bodenfläche (114) des Innenraums (108) des Gehäuses (102) abstützen und welche am Außenumfang des Permanentmagnets (112) berührungslos zu diesem oder derart mit diesem in Berührung stehend angeordnet sind, dass trotz einer Berührung eine gleitende Bewegung zwischen dem Permanentmagneten (112) und dem wenigstens einen Stützelement (206) ermöglicht wird, ohne dass wesentliche radiale Klemmkräfte erzeugt werden, die zu einem Stick-Slip-Effekt bei einer Relativbewegung der Komponenten in der Richtung der Längserstreckung des wenigstens einen Stützelements (206) führen würden.

6. Magnettopf nach Anspruch 5, **dadurch gekennzeichnet, dass** die Befestigungseinrichtung (118) ein im Querschnitt hohlzylinderförmiges Stützelement (206) umfasst.

7. Magnettopf nach Anspruch 5 oder 6, **dadurch gekennzeichnet, dass** das wenigstens eine Stützelement (206) mit der Polplatte (120) verbunden ist.

8. Magnettopf nach einem der Ansprüche 5 bis 7, **dadurch gekennzeichnet, dass** das wenigstens eine Stützelement (206) mit dem Gehäuse verbunden ist.

## Claims

1. Pot magnet for a plunger coil arrangement, in particular a plunger coil arrangement of a scale operating on the principle of electromagnetic force compensation,
(a) having a housing (102) which comprises an interior (108) having a floor surface (114) and a circumferential surface extending perpendicularly thereto, and
(b) having a permanent magnet unit (110) arranged in the interior (108) of the housing (102), which permanent magnet unit comprises a permanent magnet (112) and a pole plate (120),
(c) the permanent magnet unit (110) being provided in the housing (102) in such a way that an annular gap for receiving a plunger coil (104) of the plunger coil arrangement (100; 200) is formed between a circumferential surface of the pole plate (120) and the circumferential surface of the interior (108) of the housing (102),
(d) the permanent magnet (112), with its lower side facing the floor surface (114) of the interior (108) of the housing (102), being glued to the floor surface (114), an adhesive layer having a thickness d_{K} being formed between the floor surface (114) and the lower side of the permanent magnet (112), and
(e) the pole plate (120) being connected to the housing (102) at a distance from the permanent magnet (112) by means of a rigid fastening device (118, 206) and being positioned in such a way that a lower side of the pole plate (120) faces an upper side of the permanent magnet (112) and a gap having a predetermined gap width d_{L} is formed between the lower side of the pole plate (120) and the upper side of the permanent magnet (112),
**characterized in that**
(f) the fastening device (118) comprises a carrier element (122; 202, 204) which passes through the permanent magnet (112), the passage taking place without contact or at least in such a way that, despite contact, an axial displacement movement between the permanent magnet (112) and the carrier element (122; 202, 204) is made possible without substantial radial clamping forces being generated, which, for example, lead to a stick-slip effect in the case of a relative movement of the components in the direction of passage.

2. Pot magnet according to claim 1, **characterized in that** the carrier element (122) is screwed to the pole plate (120) and/or the housing (102).

3. Pot magnet according to either claim 1 or claim 2, **characterized in that** the carrier element (122; 202, 204) comprises an upper stop surface which interacts with the lower side of the pole plate (120), **and in that** the carrier element (122; 202, 204) comprises a lower stop surface which interacts with the floor surface (114) of the interior (108) of the housing (102).

4. Pot magnet according to claim 3, **characterized in that** the carrier element consists of a screw (204) and a spacer sleeve (202), the screw (204) passing through the spacer sleeve (202) and the spacer sleeve (202) forming the stop surfaces.

5. Pot magnet according to any of the preceding claims, **characterized in that** the fastening device (118) has at least one support element (206) which supports the pole plate (120) against the floor surface (114) of the interior (108) of the housing (102) and which is arranged on the outer circumference of the permanent magnet (112) without contact with the latter, or in contact with the latter in such a way that, despite contact, a sliding movement between the permanent magnet (112) and the at least one support element (206) is made possible without substantial radial clamping forces being generated, which would lead to a stick-slip effect in the case of a relative movement of the components in the direction of the longitudinal extension of the at least one support element (206).

6. Pot magnet according to claim 5, **characterized in that** the fastening device (118) has a support element (206) which is hollow-cylindrical in cross section.

7. Pot magnet according to either claim 5 or claim 6, **characterized in that** the at least one support element (206) is connected to the pole plate (120).

8. Pot magnet according to any of claims 5 to 7, **characterized in that** the at least one support element (206) is connected to the housing.

## Revendications

1. Pot magnétique pour un agencement de bobine mobile, en particulier un agencement de bobine mobile d'une balance fonctionnant selon le principe de la compensation électromagnétique des forces,
(a) comportant un boîtier (102) qui présente un espace intérieur (108) comportant une surface de fond (114) et une surface périphérique s'étendant perpendiculairement à celle-ci, et
(b) comportant une unité à aimant permanent (110) disposée dans l'espace intérieur (108) du boîtier (102), laquelle présente un aimant permanent (112) et une plaque polaire (120),
(c) dans lequel l'unité à aimant permanent (110) est prévue dans le boîtier (102) de telle sorte qu'un interstice annulaire destiné à recevoir une bobine mobile (104) de l'agencement de bobine mobile (100 ; 200) est formé entre une surface périphérique de la plaque polaire (120) et la surface périphérique de l'espace intérieur (108) du boîtier (102),
(d) dans lequel l'aimant permanent (112) est collé à la surface de fond (114) avec sa face inférieure tournée vers la surface de fond (114) de l'espace intérieur (108) du boîtier (102), dans lequel une couche de colle d'une épaisseur d_{K} est réalisée entre la surface de fond (114) et la face inférieure de l'aimant permanent (112), et
(e) dans lequel la plaque polaire (120) est reliée au boîtier (102) de manière à être espacée de l'aimant permanent (112) au moyen d'un dispositif de fixation (118, 206) rigide et est ainsi positionnée de telle sorte qu'une face inférieure de la plaque polaire (120) est tournée vers une face supérieure de l'aimant permanent (112) et qu'un interstice d'une largeur d'interstice d_{L} prédéterminée est formé entre la face inférieure de la plaque polaire (120) et la face supérieure de l'aimant permanent (112),
**caractérisé en ce**
(f) **que** le dispositif de fixation (118) comprend un élément de support (122 ; 202, 204) traversant l'aimant permanent (112), dans lequel la traversée est effectuée sans contact ou au moins de telle sorte que, malgré un contact, un mouvement de déplacement axial entre l'aimant permanent (112) et l'élément de support (122 ; 202, 204) est rendu possible sans que des forces de serrage radiales importantes ne soient générées, lesquelles conduisent par exemple à un effet de glissement saccadé lors d'un mouvement relatif des composants dans la direction de la traversée.

2. Pot magnétique selon la revendication 1, **caractérisé en ce que** l'élément de support (122) est vissé à la plaque polaire (120) et/ou au boîtier (102).

3. Pot magnétique selon la revendication 1 ou 2, **caractérisé en ce que** l'élément de support (122 ; 202, 204) présente une surface de butée supérieure qui coopère avec la face inférieure de la plaque polaire (120), **et en ce que** l'élément de support (122 ; 202, 204) présente une surface de butée inférieure qui coopère avec la surface de fond (114) de l'espace intérieur (108) du boîtier (102).

4. Pot magnétique selon la revendication 3, **caractérisé en ce que** l'élément de support est constitué d'une vis (204) et d'une douille d'écartement (202), dans lequel la vis (204) traverse la douille d'écartement (202) et dans lequel la douille d'écartement (202) forme les surfaces de butée.

5. Pot magnétique selon l'une des revendications précédentes,
**caractérisé en ce que** le dispositif de fixation (118) comprend au moins un élément de soutien (206) qui soutient la plaque polaire (120) par rapport à la surface de fond (114) de l'espace intérieur (108) du boîtier (102) et qui est disposé sur la périphérie extérieure de l'aimant permanent (112) sans contact avec celui-ci ou de manière à être en contact avec celui-ci de telle sorte que, malgré un contact, un mouvement de coulissement entre l'aimant permanent (112) et l'au moins un élément de soutien (206) est rendu possible sans que des forces de serrage radiales importantes ne soient générées, lesquelles entraîneraient un effet de glissement saccadé lors d'un mouvement relatif des composants dans la direction de l'extension longitudinale de l'au moins un élément de soutien (206).

6. Pot magnétique selon la revendication 5, **caractérisé en ce que** le dispositif de fixation (118) comprend un élément de soutien (206) de forme cylindrique creuse en section transversale.

7. Pot magnétique selon la revendication 5 ou 6, **caractérisé en ce que** l'au moins un élément de soutien (206) est relié à la plaque polaire (120).

8. Pot magnétique selon l'une des revendications 5 à 7,
**caractérisé en ce que** l'au moins un élément de soutien (206) est relié au boîtier.
